# EUROPÄISCHE PATENTSCHRIFT

(11) **EP 0 580 065 B1**
(45) Veröffentlichungstag und Bekanntmachung des Hinweises auf die Patenterteilung: **16.10.1996**
(21) Anmeldenummer: 93111220.5
(22) Anmeldetag: 13.07.1993
(51) Int. Cl.: A01D 78/10, A01B 63/00

(54) **Landwirtschaftliche Maschine**
Agricultural machine
Machine agricole

(30) Priorität: 24.07.1992 DE 9210001 U
(43) Veröffentlichungstag der Anmeldung: 26.01.1994
(73) Patentinhaber: GREENLAND GMBH & CO. KG, D-78244 Gottmadingen (DE)
(72) Erfinder: Maier, Martin, D-78240 Gottmadingen (DE)
(74) Vertreter: Grünecker, Kinkeldey, Stockmair & Schwanhäusser Anwaltssozietät

(56) Entgegenhaltungen:
- EP-A- 0 439 067
- EP-A- 0 465 819
- DE-A- 2 223 888
- DE-C- 4 118 683
- FR-A- 1 517 568
- GB-A- 924 925

## Beschreibung

Die Erfindung betrifft eine landwirtschaftliche Maschine der im Oberbegriff des Patentanspruchs 1 angegebenen Art.

Bei einer in der EP-A1-04 65 819 Spalte 4, Zeilen 7 bis 15 erläuterten Ausführungsform eines Kreiselheuers, die die Merkmale des Oberbegriffes des Anspruchs 1 aufweist, wird die Steuerstange mittels eines Stellhebels verstellt, an dem ein maschinenfester, vom Fahrersitz des Schleppers aus betätigbarer Arbeitszylinder angreift. Der Arbeitszylinder hat die Aufgabe, die Schwenkverstellung der Bodenlaufräder vorzunehmen und die jeweils gewünschte Schwenklage aufrechtzuerhalten. Dies bedingt einen erheblichen hydraulischen Steuerungsaufwand und erschwert es, eine exakt reproduzierbare Mittelstellungs-Schwenklage der Bodenlaufräder einzustellen. In EP-A1-04 65 819 wird jedoch auch eine Ausführungsform eines Kreiselheuers beschrieben und gezeigt, bei der der Stellhebel ausschließlich manuell zu verstellen ist, und bei der eine gegen Federkraft von Hand aus maschinenfesten Rastvertiefungen ausrückbare Klinke in eingerücktem Zustand die jeweils mit dem Stellhebel manuell eingestellte Schwenklage der Bodenlaufräder sichert. Hierbei läßt sich die Mittelstellungs-Schwenklage der Bodenlaufräder zwar exakt reproduzierbar einstellen. Jedoch ist diese Handbetätigung mühselig, weil der Maschinenführer vom Schlepper absteigen und alle notwendigen Manipulationen selbst manuell ausführen muß.

Bei einer aus EP-A1-04 39 067 bekannten Maschine wird die allen Laufrädern gemeinsame Steuerstange in der Mittelstellung und auch in einer Schwenkstellung durch einen Rasthebel verriegelt, der mit der mechanischen Sperrvorrichtung zusammenarbeitet. Die Sperrvorrichtung wird über ein Zugseil manuell gelöst, damit sich die Steuerstange verstellen läßt, bis die Sperrvorrichtung nach Loslassen des Zugseils wieder einrastet. Der Fahrzeugführer muß demzufolge die manuelle Zugseilbetätigung und die Ansteuerung des Betätigungselementes veranlassen und koordinieren.

Bei einer aus DE-A-22 23 888 bekannten Zugmaschine lassen sich die Unterlenker einer Gerätanbauvorrichtung wahlweise seitenstabil oder begrenzt seitenbeweglich einstellen.

Aus GB-A-92 49 25 ist eine Gelenkwellenaussteifung mit einer ver- bzw. entriegelbaren Gelenkaussteifung mit Kulissenführung bekannt.

Die FR-A-15 17 568 offenbart einen Querstabilisier-Vorrichtung für die Unterlenker einer Geräteanbauvorrichtung eines Schleppers.

Aus DE-C-41 18 683 ist eine federbelastete und entriegelbare Klinkensperre für die Seitenstreben des Unterlenkers einer Dreipunkt-Anbauvorrichtung eines Traktors bekannt.

Der Erfindung liegt die Aufgabe zugrunde, eine landwirtschaftliche Maschine der eingangs genannten Art zu schaffen, die eine den groben Arbeitsbedingungen auf dem Feld und beim Transport angepaßte, zuverlässige Einstellung der Bodenlaufräder ermöglicht, wobei die Genauigkeit der Einstellung unabhängig von der Sorgfalt des Schlepperfahrers und wie vom Hersteller vorbestimmt reproduzierbar sein soll.

Die gestellte Aufgabe wird erfindungsgemäß mit den Merkmalen des Patentanspruchs 1 gelöst.

Bei dieser Ausbildung wird der Schlepperfahrer bei hohem Bedienungskomfort freigestellt, zumindest die Mittelstellungs-Schwenklage der Laufräder für den Normalbetrieb genau einzustellen. Die mechanische Sperrvorrichtung, die der Schlepperfahrer über das Betätigungselement mittels der Schlepperhydraulik betätigt, sorgt für die genaue Herstellung der Mittelstellungs-Schwenklage der Bodenlaufräder. Die erforderlich verstellbarkeit der Bodenlaufräder für Diagonalstellungen der Maschine wird dadurch nicht beeinträchtigt. Für eine genaue Einstellung der Mittelstellungs-Schwenklage braucht der Schlepperfahrer keine Sorgfalt aufzubringen, denn die Bodenlaufräder nehmen die vom Hersteller als optimal angesehene Schwenklage ein, sobald die Sperrichtung wirksam ist. Es ergibt sich ein Zeitgewinn, weil die Einstellung zumindest der Mittelstellungs-Schwenklage aller Bodenlaufräder rasch und ferngesteuert über das Betätigungselement erfolgt. Die Schlepperhydraulik ist dann während des Normalbetriebes entlastet, so daß keine komplizierten hydraulischen Steuereinrichtungen oder Positioniereinrichtungen benötigt werden. Eine Klinkensperre ist kostengünstig herstellbar und den groben Arbeitsbedingungen auf dem Feld und beim Transport gewachsen.

Im Hinblick auf eine günstige Kraftübertragung ist die Ausführungsform gemäß Anspruch 2 vorteilhaft. Es wäre aber auch denkbar, die Einbaulagen von Klinkensperre und Mittelstellungsanschlag zu vertauschen.

Die Ausführungsform gemäß Anspruch 3 ist baulich einfach. Die Sperrklinke behält ihre einmal eingestellte Lage auch unter den Fahrbewegungen und Erschütterungen bei, bis sie gewollt und mittels des Arbeitszylinders in eine andere Stellung gebracht wird.

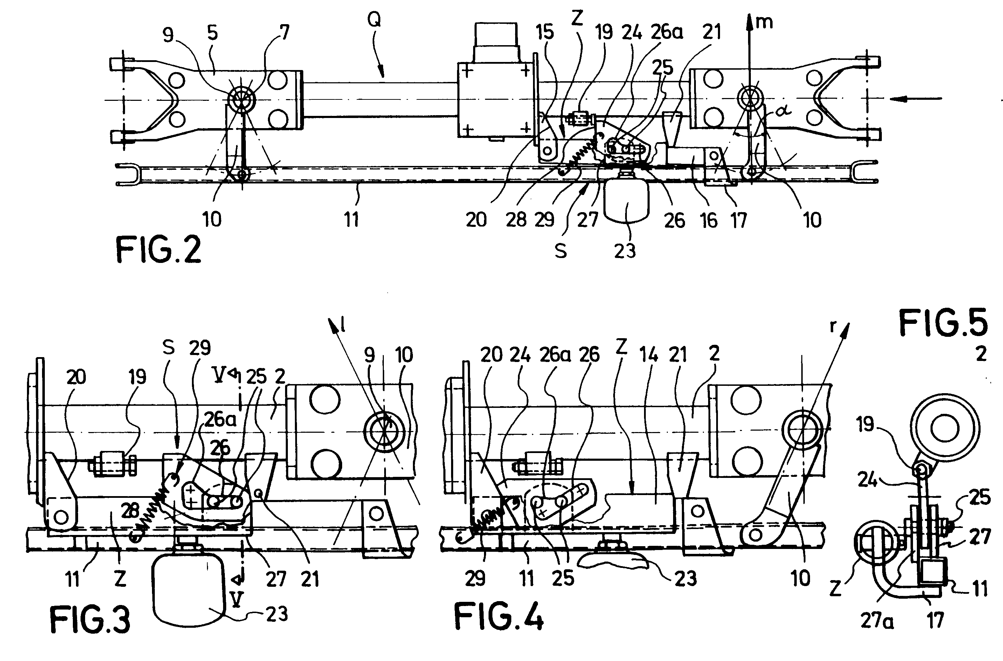

Die Lagesicherung der Sperrklinke wird auf denkbar einfache Weise bei der Ausführungsform gemäß Fig. 4 bewerkstelligt.

Die Betätigung der Klinkensperre ist bei der Ausführungsform gemäß Anspruch 5 besonders einfach.

Eine kräftige und trotzdem leichtgängige Halterung der Sperrklinke ist bei der Ausführungsform gemäß Anspruch 6 gegeben.

Eine Feineinstellung der Mittelstellungs-Schwenklage aller Bodenlaufräder ist bei der Ausführungsform gemäß Anspruch 7 nachträglich möglich.

Bei der Ausführungsform gemäß Anspruch 8 ist der Arbeitszylinder für beide Stellrichtungen beim Verschwenken der Bodenlaufräder verantwortlich.

Bei der besonders zweckmäßigen Ausführungsform gemäß Anspruch 9 ist der Arbeitszylinder in der Mittelstellungs-Schwenklage der Bodenlaufräder hydraulisch entlastet, weil der permanent wirkende Federspeicher, die Gasfeder oder der Druckspeicher mit der Sperrvorrichtung kooperieren und so die Bodenlaufräder ohne Einflußnahme der Schlepperhydraulik in der gewünschten Lage halten.

Anhand der Zeichnung werden Ausführungsformen des Erfindungsgegenstandes erläutert. Es zeigt:
- Fig. 1: eine schematische Draufsicht auf eine landwirtschaftliche Maschine in der Normalbetriebsstellung,
- Fig. 2: einen Teil einer landwirtschaftlichen Maschine, die der in Fig. 1 gezeigten ähnlich ist, in einer Detaildraufsicht und in Normalbetriebsstellung,
- Fig. 3 + 4: vergrößert einen Ausschnitt aus Fig. 2 in zwei unterschiedlichen Betriebsstellungen, und
- Fig. 5: einen Schnitt in der Ebene V-V von Fig. 3.

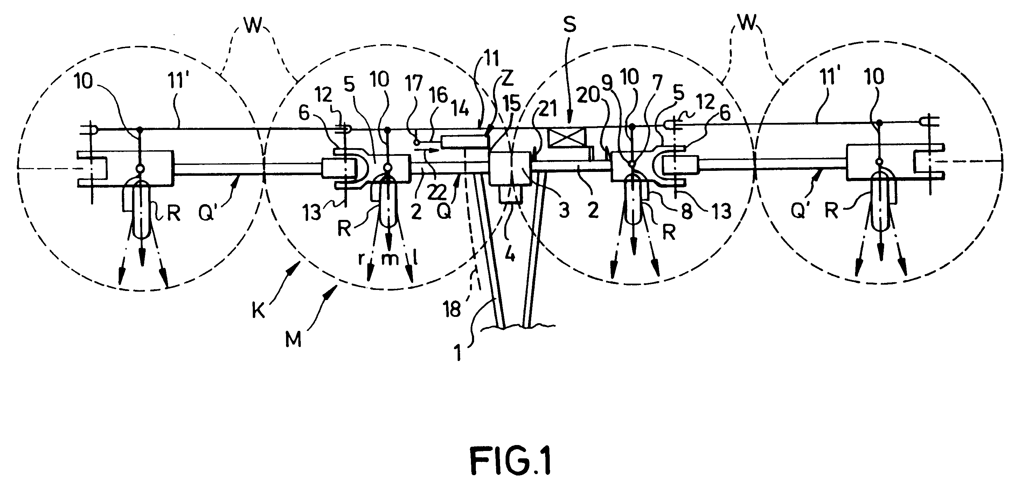

Eine landwirtschaftliche Maschine M, z.B. ein Kreiselheuer K, gemäß Fig. 1 weist einen Querträger Q auf, der über eine Kopplungsvorrichtung 1 an einen nicht dargestellten Schlepper anschließbar ist. In der in Fig. 1 angedeuteten Normalbetriebsstellung (Draufsicht) wird der Kreiselheuer K mit quer zur Fahrtrichtung liegendem Querträger Q geschleppt oder geschoben.

Der Querträger Q besteht aus zwei koaxialen Tragrohren 2, die an ein Getriebegehäuse 3 mit einem Anschluß 4 für die Zapfwelle des Schleppers angeschlossen sind. An den Enden der Tragrohre 2 sind Getriebekästen 5 befestigt, die Gelenkgabeln 6 zum Anschließen von Seiten-Querträgern Q' aufweisen. Die Seiten-Querträger Q' sind um horizontale Schwenkachsen 13 relativ zum Querträger Q aufund abschwenkbar. Am Querträger Q sind in den Getriebekästen 5 Werkzeugträger W gelagert, z.B. Zinkenkreisel, die um annähernd vertikale, d.h. geringfügig gegen die Fahrtrichtung schräggestellte, Achsen 7 drehbar sind. Für jeden Werkzeugträger W ist ein Bodenlaufrad R vorgesehen, das um die Achse 7 (oder um eine getrennte, in etwa vertikale Achse 7) aus der gezeigten Mittelstellungs-Schwenklage m begrenzt zu jeder Seite in eine linke oder in eine rechte Schwenklage l e oder r (angedeutet durch strichpunktierte Pfeile) schwenkbar ist. Jedes Bodenlaufrad R ist über einen Radträger 8 mit einer die Achse 7 definierenden Welle verbunden, an der ein quer zum Querträger Q abstehender Stellhebel 10 befestigt ist. Der Schwenkwinkel ist auf ca. 20° - 25° zu jeder Seite (α = ca. 40° - 50°) begrenzt.

Am Querträger Q sind zwei Werkzeugträger W angeordnet. Die beiden Stellhebel 10 der Bodenlaufräder R sind mit einer gemeinsamen, in etwa zum Querträger Q parallelen Steuerstange 11 gelenkig gekoppelt, die an ihren Enden über Kuppelgelenke 12 mit Steuerstangen 11' der beiden Seiten-Querträger Q' kuppelbar ist. Die Stellhebel 10 der Bodenlaufräder R der Werkzeugträger W der Seiten-Querträger Q' sind gelenkig mit den Steuerstangen 11' verbunden, so daß alle Bodenlaufräder R des Kreiselheuers K dieselben Schwenklagen einnehmen und bei einer Verstellung synchron verstellt werden. Es könnte auch am Querträger Q mindestens ein Bodenlaufrad auf die gleiche Weise schwenkbar und schwenkverstellbar angeordnet sein.

Am Querträger Q ist ein Arbeitszylinder Z angebracht, der zum Verstellen der Schwenklagen der Bodenlaufräder R dient. Der Arbeitszylinder Z ist ein Hydraullkzylinder, in der gezeigten Ausführungsform gemäß Fig. 1 ein doppelt wirkender Hydraulikzylinder, der über strichliert angedeutete Anschlußleitungen 18 mit der Schlepperhydraulik verbunden ist. Der Arbeitszylinder Z ist mit seinem Zylindergehäuse 14 an einer Halterung 15 des Getriebegehäuses 3 abgestützt. Seine Kolbenstange 16 ist durch eine Verbindungslasche 17 mit der Steuerstange 11 gekoppelt. In der Normalbetriebsstellung wird die Kolbenstange 16 in Richtung eines Pfeiles 22 beaufschlagt.

Zwischen der Steuerstange 11 und dem Querträger Q ist eine mechanische Sperrvorrichtung S vorgesehen, die zum Einhalten der in Fig. 1 gezeigten Mittelstellungs-Schwenklage m aller Bodenlaufräder R dient. Die Sperrvorrichtung S weist eine Klinkensperre auf, die an der Steuerstange 11 befestigt ist und mit einem Mittelstellungs-Anschlag 19 am Tragrohr 2 des Querträgers Q zusammenarbeitet. Am Querträger Q sind Stellanschläge 20, 21 befestigt, die bei der Betätigung der Sperrvorrichtung S miwirken, um diese zwischen einer Lösestellung und einer Einrückstellung (in Fig. 1 gezeigt) zu verstellen.

In der Normalbetriebsstellung gemäß Fig. 1 werden die Bodenlaufräder R in ihrer Mittelstellungs-Schwenklage m gehalten, da die Kolbenstange 16 aufgrund der Beaufschlagung in Richtung des Pfeiles 22 die Steuerstange 11 nach rechts beaufschlagt und die Sperrvorrichtung S am Mittelstellungs-Anschlag 19 abgefangen ist. Um die Bodenlaufräder R nach links zu verschwenken, wird die Kolbenstange 16 ausgefahren. Wird später die Mittelstellungs-Schwenklage m gewünscht, dann wird die Kolbenstange 16 eingeschoben, bis die Sperrvorrichtung S wieder mit dem Mittelstellungsanschlag 19 zusammenarbeitet. Wird die Schwenklage r für die Bodenlaufräder gewünscht, dann wird mittels des Arbeitszylinders Z zunächst die Kolbenstange 16 ausgefahren, bis der Stellanschlag 21 die Sperrvorrichtung S in ihre Lösestellung verstellt, die sie beibehält, wenn nachfolgend die Kolbenstange 16 gänzlich eingezogen wird und die Bodenlaufräder R in die gewünschte Schwenklage verschwenkt. Um danach wieder die Mittelstellungs-Schwenklage m einzustellen, wird die Kolbenstange 16 zur Gänze ausgefahren, bis der Stellanschlag 21 die Sperrvorrichtung S in die Eingriffsstellung bringt, ehe sie beim teilweisen Einziehen der Kolbenstange 16 am Mittelstellungsanschlag 19 anschlägt.

Gemäß Fig. 2 ist die Sperrvorrichtung S im Arbeitsbereich des Arbeitszylinders Z zwischen der Steuerstange 11 und dem Querträger Q angeordnet. Sie ist als Klinkensperre mit einer Sperrklinke 24 ausgebildet, die in einer Kulissenfürung zwischen der Lösestellung und der Eingriffsstellung hin- und herbeweglich gelagert ist. Zu diesem Zweck sind (Fig. 5) an der Steuerstange 11 zwei Führungslaschen 27, 27a befestigt, zwischen denen die Sperrklinke 24 beweglich geführt ist. Die Sperrklinke 24 hat in etwa trapezförmigen Umriß und ein Langloch 26 mit einem einseitig erweiterten Endbereich 26a. In das Langloch 26 greift ein langgestrecktes Eingriffsteil ein, der von zwei in den Laschen 27, 27a befestigten, in etwa in Längsrichtung der Steuerstange 11 hintereinanderliegenden Quervorsprüngen 25 gebildet wird. Zweckmäßigerweise sind die Quervorsprünge 25 durch die Fürungslaschen 27, 27a und das Langloch 26 greifende Schrauben.

Die Sperrklinke 24 besitzt eine seitlich vorspringende Sperrnase 28, die im Bewegungsweg, den die Sperrklinke 24 mit der Steuerstange 11 ausführt, auf den Mittelstellungsanschlag 19 ausgerichtet ist, wenn sich die Sperrklinke 24 in der in den Fig. 2, 3, 5 gezeigten Eingriffsstellung befindet, in der die Quervorsprünge 25 in den engen Bereich des Langloches 26 eingreifen. Eine Feder 29 an der Steuerstange 11 zieht die Sperrklinke in Schwenkrichtung um den in Fig. 3 rechten Quervorsprung 25 entgegen dem Uhrzeigersinn zur Steuerstange 11 hin. Da die Wirklinie der Feder 29 relativ zum engen Bereich des Langloches 26 schräg liegt, wird die Sperrklinke 24 selbsttätig festgelegt.

Wird die Sperrklinke 24 aus der Eingriffstellung gemäß Fig. 3 relativ zu den Quervorsprüngen 25 nach rechts verschoben, dann tritt der in Fig. 3 linke Quervorsprung 25 in den erweiterten Endbereich 26a des Langloches 26 ein, wodurch der Sperrklinke 24 eine Schwenkbewegung unter der Kraft der Feder 29 entgegen dem Uhrzeigersinn bis in die Lösestellung gemäß Fig. 4 möglich ist. Dank der Feder 29 bleibt die Sperrklinke 24 in der Lösestellung (Fig. 4), bis sie erneut nach links verschoben wird. In der Lösestellung ist die Nase 28 aus dem Eingriffsbereich mit dem Mittelanschlag 19 herausbewegt. Die Steuerstange 11 läßt sich durch den Arbeitszylinder Z in beiden Richtungen verstellen.

Wird gemäß Fig. 3 der Arbeitszylinder Z ausgefahren, um die linke Schwenklage l der Bodenlaufräder R einzustellen, dann wird der am Tragrohr 2 angebrachte Stellanschlag 21 wirksam, der die Sperrklinke 24 relativ zu den Quervorsprüngen 25 nach links verschiebt, bis die Quervorsprünge 25 wieder im engen Bereich des Langlochs 26 sitzen und die Nase 28 in den Eingriffsbereich des Mittelanschlags 19 heben. Der Arbeitszylinder hält die linke Schwenklage l.

Bei der Ausführungsform der Fig. 2 bis 5 ist der Arbeitszylinder Z ein einfach wirkender Hydraulikzylinder, der in Ausfahrrichtung seiner Kolbenstange 16 von der Schlepperhydraulik beaufschlagt werden kann. In der Gegenrichtung wird die Kolbenstange 16 permanent durch einen Druckspeicher 23 beaufschlagt, der wie eine Feder wirkt und die Kolbenstange 16 einfährt, sobald die Beaufschlagung des Hydraulikzylinders durch die Schlepperhydraulik beendet und der Druck abgebaut ist.

Dies bedeutet, daß zum erneuten Einstellen der in Fig. 2 gezeigten Mittelstellungs-Schwenklage m aus der linken Schwenklage l gemäß Fig. 3 nur der Arbeitszylinders Z von der Schlepperhydraulik entlastet wird. Der Druckspeicher 23 wirkt in Einziehrichtung der Kolbenstange 16, so daß die Nase 28 der Sperrklinke 24 am Mittelstellungsanschlag 19 abgefangen wird.

Um aus der Mittelstellungs-Schwenklage m in die rechte Schwenklage r gemäß Fig. 4 umzustellen, wird zunächst die Kolbenstange 16 geringfügig ausgefahren, bis die Feder 29 die Sperrklinke 24 um den rechten Quervorsprung 25 in die Lösestellung gemäß Fig. 4 verschwenkt. Dann wird der Arbeitszylinder Z hydraulisch entlastet, damit der Druckspeicher 23 die Kolbenstange 14 einzuziehen vermag. Die Nase 28 kommt dann am Anschlag 20 zur Anlage.

Wird wieder die Mittelstellungs-Schwenklage m gebraucht, dann wird der Arbeitszylinder Z ausgefahren, bis die Sperrklinke 24 am Stellanschlag 21 in die Eingriffsstellung gemäß Fig. 3 verstellt ist. Dann schiebt der Druckspeicher 23 die Nase 28 gegen den Mittelstellungsanschlag 19. Der Mittelstellungsanschlag 19 kann getrennt einstellbar sein.

## Patentansprüche

1. Landwirtschaftliche Maschine (M), insbesondere Kreiselheuer (K), mit einem an einen Schlepper anschließbaren, quer zur Fahrtrichtung liegenden Querträger (Q, Q'), an dem mindestens ein Werkzeugträger (W) angeordnet ist, mit mehreren, um annähernd vertikale Achse (7) verschwenkbaren Bodenlaufrädern (R), die über Stellhebel (10) an eine zum gemeinsamen begrenzten Verschwenken der Bodenlaufräder (R) betätigbare Steuerstange (11) gekoppelt sind, und mit einem einerseits an dem Querträger (Q, Q') angeordneten Arbeitszylinder (Z) zum Verstellen der Bodenlaufräder (R) zwischen einer zum Querträger senkrechten Mittelstellungs-Schwenklage (m) und linken und rechten Schwenklagen (l, r), **dadurch gekennzeichnet**, daß der Arbeitszylinder (2) andererseits an der Steuerstange (11) angeordnet ist, daß eine mechanische, auslösbare und einrückbare Sperrvorrichtung (S) zum Festlegen der Bodenlaufrädern (R) zumindest in der Mittelstellungs-Schwenklage (m) vorgesehen ist, daß die Sperrvorrichtung (S) als zwischen der Steuerstange (11) und dem Querträger (Q) angeordnete und zumindest auf einen Mittelstellungsanschlag (19) ausgerichtete Klinkensperre ausgebildet ist, und daß die Sperrvorrichtung (S) mittels des Arbeitszylinders (Z) auslösbar und einrückbar ist.

2. Maschine nach Anspruch 1, **dadurch gekennzeichnet**, daß die Klinkensperre an der Steuerstange (11) und der Mittelstellungsanschlag (19) am Querträger (Q) angeordnet sind.

3. Maschine nach Anspruch 2, **dadurch gekennzeichnet**, daß die Klinkensperre eine in der von der Steuerstange (11) und dem Mittelstellungsanschlag (19) definierten Ebene beweglich gelagerte Sperrklinke (24) aufweist, die in einer Kulissenführung zwischen einer Lösestellung, in der sie außerhalb des Eingriffs des Mittelstellungsanschlags (19) liegt, und einer Einrückstellung, in der sie im Eingriffsbereich des Mittelstellungsanschlags (19) liegt, verstellbar geführt ist.

4. Maschine nach Anspruch 3, **dadurch gekennzeichnet**, daß die Sperrklinke (24) durch eine Feder (29) in Richtung auf die Lösestellung beaufschlagt ist, und daß die Wirkrichtung der Feder (29) schräg zur Führrichtung der Kulissenführung verläuft, derart, daß die Sperrklinke (24) in der Löse- und in der Einrückstellung durch die Feder (29) kraftschlüssig festsetzbar ist.

5. Maschine nach den Ansprüchen 3 und 4, **dadurch gekennzeichnet**, daß wenigstens ein querträgerfester Stellanschlag (20, 21) für die Sperrklinke (24) vorgesehen ist, an dem die Sperrklinke (24) mittels des Arbeitszylinders (Z) zwischen der Löse- und der Einrückstellung verstellbar ist.

6. Maschine nach den Ansprüchen 1 bis 5, **dadurch gekennzeichnet**, daß die Sperrklinke (24) an einer Führungslasche (27), vorzugsweise zwischen zwei Führungslaschen (27, 27a), an der Steuerstange (11) geführt ist, und daß die Führungslasche (27) einen langgestreckten Eingriffsteil, vorzugsweise zwei in Bewegungsrichtung des Steuerstange (11) hintereinanderliegende Quervorsprünge (25), trägt, der in ein in einem Endabschnitt (26a) verbreitertes Langloch (26) der Sperrklinke (24) eingreift.

7. Maschine nach Anspruch 1, **dadurch gekennzeichnet**, daß der Mittelstellungsanschlag (19) verstellbar ist.

8. Maschine nach wenigstens einem der Ansprüche 1 bis 7, **dadurch gekennzeichnet**, daß der Arbeitszylinder (Z) ein doppelt wirkender, an die Schlepperhydraulik anschließbarer Hydraulikzylinder ist.

9. Maschine nach wenigstens einem der Ansprüche 1 bis 7, **dadurch gekennzeichnet**, daß der Arbeitszylinder (Z) ein einfach wirkender, an die Schlepperhydraulik anschließbarer Hydraulikzylinder ist, der entgegen der Beaufschlagungsrichtung permanent durch einen Federspeicher, eine Gasfeder oder einen Druckspeicher (23) beaufschlagt ist.

## Claims

1. Agricultural machine (M), more especially a rotary-type haymaker (K), including a cross-piece member (Q, Q'), which is attachable to a tractor and extends at right angles to the direction of travel, at least one tool holder (W) being disposed on said cross-piece member, a plurality of ground running wheels (R), which are pivotable about an approximately vertical axis (7) and are connected, via adjusting lever (10), to a control rod (11), which is actuatable to achieve the joint, limited pivotal movement of the ground running wheels (R), and a working cylinder (Z), which is disposed with one end on the cross-piece member (Q, Q'), for adjusting the ground running wheels (R) between a mid-position pivotal location (m), which is perpendicular to the cross-piece member, and left and right pivotal locations (l, r), characterised in that the working cylinder (Z) is disposed with the other end on the control rod (11), in that a mechanical, releasable and engageable locking device (S) is provided for securing the ground running wheels (R) in at least the mid-position pivotal location (m), in that the locking device (S) is configured as the locking pawl, which is disposed between the control rod (11) and the cross-piece member (Q) and is aligned with at least one mid-position stop member (19), and in that the locking device (S) is releasable and engageable by means of the working cylinder (Z).

2. Machine according to claim 1, characterised in that the locking pawl is disposed on the control rod (11), and the mid-position stop member (19) is disposed on the cross-piece member (Q).

3. Machine according to claim 2, characterised in that the locking pawl has a detent (24), which is displaceably mounted in the plane defined by the control rod (11) and the mid-position stop member (19), and said detent is displaceably guided in a slidable guide between a release position, in which the detent lies outside the engagement range of the mid-position stop member (19), and an engagement position, in which the detent lies within the engagement range of the mid-position stop member (19).

4. Machine according to claim 3, characterised in that the detent (24) is actuated by a spring (29) in a direction towards the release position, and in that the operative direction of the spring (29) extends inclinedly relative to the direction of guidance of the slidable guide in such a manner that the detent (24) is securable in the release position and in the engagement position in a force-locking manner by means of the spring (29).

5. Machine according to claims 3 and 4, characterised in that at least one adjustable stop member (20, 21), which is secured to the cross-piece member, is provided for the detent (24), and the detent (24) is displaceable on said stop member between the release position and the engagement position by means of the working cylinder (Z).

6. Machine according to claims 1 to 5, characterised in that the detent (24) is guided on a guide lug (27), preferably between two guide lugs (27, 27a), on the control rod (11), and in that the guide lug (27) has an elongate engagement member, preferably two transverse projection members (25) lying one behind the other when viewed with respect to the direction of displacement of the control rod (11), said engagement member engaging in an elongate slot (26) in the detent (24), which slot has been widened in an end portion (26a).

7. Machine according to claim 1, characterised in that the mid-position stop member (19) is adjustable.

8. Machine according to at least one of claims 1 to 7, characterised in that the working cylinder (Z) is a double-acting hydraulic cylinder attachable to the hydraulic system of the tractor.

9. Machine according to at least one of claims 1 to 7, characterised in that the working cylinder (Z) is a single-acting hydraulic cylinder, which is attachable to the hydraulic system of the tractor and is permanently actuated by a spring accumulator, a pneumatic spring or a pressure accumulator (23) in opposition to the direction of actuation.

## Revendications

1. Machine agricole (M), en particulier faneuse rotative (K) avec une poutre transversale (Q, Q') raccordable à un tracteur et placée transversalement à la direction de parcours et sur laquelle est disposé au moins un porte-outils (W), avec plusieurs roues porteuses de roulement au sol (4) pouvant pivoter autour d'un axe approximativement vertical (7) et qui sont accouplées par l'intermédiaire de leviers déplaceurs (10) à une barre de commande (11) pouvant être actionnée pour le pivotement limité commun des roues porteuses de roulement au sol (R), et avec un cylindre de vérin de travail (Z), monté, d'une part, sur la poutre transversal (Q, Q') pour le déplacement des roues porteuses de roulement au sol (R) entre une position médiane de pivotement (m), perpendiculaire à la poutre transversale, et des positions de pivotement de gauche et de droite (l, r), caractérisée en ce que le cylindre de vérin de travail (Z) est monté, d'autre part, sur la barre de commande (11), en ce qu'un dispositif de blocage mécanique (S), déblocable et enclenchable est prévu pour l'immobilisation des roues porteuses de roulement au sol (R) au moins dans la position médiane de pivotement (m), en ce que le dispositif de blocage (S) est réalisé sous forme d'organe de blocage à cliquet disposé entre la barre de commande (11) et la poutre transversale (Q) et orienté au moins vers une butée de position médiane (19), et en ce que le dispositif de blocage (S) est déblocable et enclenchable au moyen du cylindre de vérin de travail (Z).

2. Machine selon la revendication 1, caractérisée en ce que l'organe de blocage à cliquet est disposé sur la barre de commande (11) et la butée de position moyenne (19) est montée sur la poutre transversale (Q).

3. Machine selon la revendication 2, caractérisée en ce que l'organe de blocage à cliquet comporte un cliquet de blocage (24) monté mobilement dans le plan défini par la barre de commande (11) et la butée de position moyenne (19) et lequel est guidé de façon déplacable dans un guide à coulisse entre une position de dégagement dans laquelle il est situé en dehors de l'engagement de la butée de position moyenne (19) et une position d'enclenchement dans laquelle il est située dans le domaine d'entrée en prise de la butée de position moyenne (19).

4. Machine selon la revendication 3, caractérisée en ce que le cliquet de blocage (24) est sollicité par un ressort (29) en direction de la position de dégagement et en ce que la direction d'action du ressort (29) s'étend obliquement à la direction de guidage du guide à coulisse de telle façon que le cliquet de blocage (24) est immobilisable par effet de force par le ressort (29) dans la position de dégagement et dans la position d'enclenchement.

5. Machine selon les revendications 3 et 4, caractérisée en ce qu'au moins une butée de positionnement (20, 21) solidaire de la poutre transversale est prévue pour le cliquet de blocage (24), contre laquelle le cliquet de blocage (24) est déplacable au moyen du cylindre de vérin de travail (Z) entre la position de dégagement et la position d'enclenchement.

6. Machine selon les revendications 1 à 5, caractérisée en ce que le cliquet de blocage (24) est guidé contre une éclisse de guidage (27), de préférence entre deux éclisses de guidage (27, 27a), sur la barre de commande (11) et en ce que l'éclisse de guidage (27) porte un élément d'entrée en prise allongé, de préférence deux saillies transversales (25) situées l'une derrière l'autre dans la direction de mouvement de la barre de commande (11), lequel élément pénètre dans un trou oblong (26), élargi dans une portion extrême (26a), du cliquet de blocage (24).

7. Machine selon la revendication 1, caractérisée en ce que la butée de position moyenne (19) est déplacable.

8. Machine selon au moins l'une des revendications 1 à 7, caractérisée en ce que le cylindre de vérin de travail (Z) est un cylindre de vérin hydraulique à double effet raccordable au système hydraulique du tracteur.

9. Machine selon au moins l'une des revendications 1 à 7, caractérisée en ce que le cylindre de vérin de travail (Z) est un cylindre de vérin hydraulique à simple effet raccordable au système hydraulique du tracteur et qui est sollicité en permanence, à l'encontre du sens de sollicitation, par un ressort accumulateur, un ressort à gaz ou un accumulateur de pression (23).
